# EUROPEAN PATENT APPLICATION

(11) **EP 4 748 471 A1**
(43) Date of publication of application: **27.05.2026**
(21) Application number: 25218698.6
(22) Date of filing: 26.11.2025
(51) Int. Cl.: B01D 46/44, B01D 46/46, B01D 46/71

(54) **SYSTEMS AND METHODS TO CONTROL FUME EXTRACTION DAMPERS**

(30) Priority: 26.11.2024 US 202463725250 P; 17.11.2025 US 202519391470
(71) Applicant: Illinois Tool Works Inc., Glenview IL 60025 (US)
(72) Inventor: KOPAC III, Jordan, Glenview, 60025 (US); GUSE, Matthew, Glenview, 60025 (US); PATEL, Nishank, Glenview, 60025 (US)
(74) Representative: HGF

(57) **Abstract**

A fume extraction system is designed to include one or more filters arranged in a housing of the fume extraction system. Air from an ambient environment is introduced into the housing of the fume extraction system via one or more inlets. A self-cleaning system is connected to expel surface particulates from the one or more filters. And one or more movable barriers are arranged at the one or more inlets or outlets, configured to move from an open configuration to a closed configuration.

## Description

### RELATED APPLICATIONS

The present application claims the benefit of U.S. Provisional Patent Application Serial No. 63/725,250, filed November 26, 2024, entitled "SYSTEMS AND METHODS TO CONTROL FUME EXTRACTION DAMPERS." The entirety of U.S. Provisional Patent Application Serial No. 63/725,250 is expressly incorporated herein by reference.

### FIELD OF THE DISCLOSURE

This disclosure relates generally to welding fume extraction and, more particularly, to systems and methods to control fume extraction dampers.

### BACKGROUND

A wide range of industrial, commercial, hobby and other applications result in airborne components that can be removed with proper extraction and filtering. Metal working operations, for example, range from cutting, welding, soldering, assembly, and other processes that may generate smoke and fumes. In smaller shops it may be convenient simply to open ambient air passages or to use suction or discharge air from fans to maintain air spaces relatively clear. In other applications, enclosed and/or cart-type fume extraction systems are used. In industrial settings, larger or more complex systems may be employed for extracting fumes from the environment surrounding works cells, metal working locations, and so forth. In other settings, such as machine shops, woodworking shops, worksites where cutting, sanding and other operations are performed, dust, fumes, particulate and other types of airborne components may be generated that it may be desirable to collect and extract from work areas and controlled spaces.

A number of systems have been developed for fume extraction, and a certain number of these are currently in use. In general, these use suction air to draw fumes and smoke from the immediate vicinity of the metalworking operation, and to filter the fumes and smoke before returning the air to the room or blowing the air to an outside space.

Further improvements are needed, however, in fume extraction systems. For example, it would be useful to be able to service and clean filters without removing the filters and/or systems from the environment, thereby improving responsiveness, effectiveness and useful life of the extraction system.

### SUMMARY

The present disclosure provides improvements to conventional fume extraction system designs. Example systems can automatically and/or manually control filter cleaning operations at one or more fume extraction systems, in response to operational changes, sensor data, and/or a user input. These and other features and advantages of the present invention will be apparent from the following detailed description, in conjunction with the appended claims.

### BRIEF DESCRIPTION OF THE DRAWINGS

The benefits and advantages of the present invention will become more readily apparent to those of ordinary skill in the relevant art after reviewing the following detailed description and accompanying drawings, wherein:
FIGS. 1A and 1B illustrate example fume extractors that include a self-cleaning system, in accordance with aspects of this disclosure.
FIGS. 2A and 2B illustrate other example fume extractors that includes a self-cleaning system, in accordance with aspects of this disclosure.
FIG. 3 is a diagram of control circuitry to operate example fume extractors and self-cleaning systems, in accordance with aspects of this disclosure.

The figures are not necessarily to scale. Where appropriate, similar or identical reference numbers are used to refer to similar or identical components.

### DETAILED DESCRIPTION

Disclosed are systems and methods for fume extraction control and maintenance thereof. In particular, a fume extraction system operates in a welding or other industrial environment, in which a welding or other manufacturing operation is being performed. As a result, fumes, debris, etc., are being generated and put into the working environment.

Disclosed fume extraction systems are arranged in the working environment include one or more filters to collect fumes and debris, the filters being arranged in a housing of the fume extraction system. Air, fume and debris are introduced from the ambient environment into the housing of the fume extraction system via one or more inlets.

After a fume extraction operation, the filters collect particulates from the fume and debris on a surface of the filter exposed to the interior of the housing. This can clog pores of the filter media, thereby limiting the effectiveness of the filters in cleaning the environmental air, as well as requiring a motor creating airflow suction to operate at elevated speeds.

A self-cleaning system is connected to the fume extraction system, configured to force pressurized air out from a cavity of one or more of the filters. This forces surface particulates to dislodge from the filter media and into the interior of the housing. In order to prevent the particulates from escaping through the inlets, one or more movable barriers are arranged at the inlets, configured to move from an open configuration (corresponding to a fume extraction operation) to a closed configuration (corresponding to a self-cleaning or forced air operation).

Activation of the movable barriers can be triggered by one or more conditions. For example, the movable barriers can be biased (by one or more springs, weights, belts, etc.) in a default position to be closed, such that activation of the fume extraction system causes the movable barriers to open. This can be in response to activation of the fume extraction system's motor, a change in pressure in the fume extraction system, sensor data, and/or commands from a user input or control circuitry.

In some examples, the movable barriers' default position can be opened, such that deactivation of the fume extraction system (and/or activation of the self-cleaning system) causes the movable barriers to close. This can be in response to deactivation of the fume extraction system's motor, a change in pressure in the fume extraction system, sensor data, and/or commands from a user input or control circuitry.

In some examples, an actuator is connected to the movable barriers and configured to activate in response to changes in the fume extraction system and/or the self-cleaning system. The actuator can be one or more of a mechanical actuator, a hydraulic actuator, a pneumatic actuator, an electric actuator, or a gravitational actuator, including one or more valves, motors, or solenoids, as a list of non-limiting examples.

Activation and/or changes in motor speed of the fume extraction system can be monitored by sensors and/or control circuitry, which can be connected to the actuators to cause the movable barriers to change position according to the particular operation.

Pressure changes can correspond to fume extraction operations (e.g., at the inlets, the housing, and/or the filters), as environmental is introduced into the system. Pressure changes can all correspond to the self-cleaning system, measured at the filters, and/or at an air compressor. The actuator can be configured to deactivate in the absence of airflow from the motor, causing movement of the one or more linkages to return to the default position, releasing the one or more moveable barriers to move into a closed position. The actuator can additionally or alternatively be configured to activate in the presence of airflow from the motor, causing movement of the one or more linkages to cause the moveable barriers to move into an open position.

Similarly, the actuators can additionally or alternatively be configured to operate in response to the self-cleaning system. The actuator can be configured to activate and/or deactivate based on activation and/or pressure from an air compressor, causing movement of the one or more linkages to forcing the moveable barriers to move. The actuator can cause movement of the linkages and/or moveable barriers to an open and/or closed position to accommodate the selected operation.

Determination of the specific operation can be based on mechanical indicators (e.g., a physical switch, attaching a hose, etc.), and/or one or more monitored condition. For example, control circuitry can receive instructions to operate in a fume extraction mode or a self-cleaning mode, and command movement of the actuators/linkages/movable barriers accordingly.

In some examples, one or more sensors (e.g., an optical camera, a laser scanner, a magnetic sensor, a heat sensor, a contact sensor, a voltage sensor, an accelerometer, an inertial measuring unit, etc.) may monitor the fume extraction system and/or the self-cleaning system. Control circuitry (e.g., associated with one or both of the fume extraction system and/or the self-cleaning system) is operable to receive signals from the one or more sensors, compare the sensor information to a list of data corresponding to conditions of the fume extraction system and/or the self-cleaning system (e.g., stored in a local or networked database), to determine which operation or mode is selected. In some examples, the control circuitry can control the actuators/linkages/movable barriers based on the comparison. As a result, fume extraction operations and/or self-cleaning operations are performed automatically, efficiently, and effectively on a single system.

Although several examples are provided describing the movable barriers, linkages and actuators, operating at or on the inlets of the fume extraction system, in some examples movable barriers, linkages and actuators can be arranged at the outlet or exhaust of the fume extraction system, substantially operated as disclosed herein.

Conventional fume extraction systems employ can be costly to operate, including replacing filters that have not been regularly or properly cleaned. However, cleaning the filters can often release some amount of fumes and debris back into the work environment.

Some self-contained ambient fume capture and cleaning systems currently in use suck in fume haze created during industrial operations, and filter the fumes through a series of filters. Once having passed through the filters, the filtered air is evacuated from the system. Example self-cleaning systems apply highly compressed air through one or more surfaces of the filters (e.g., inside to out), thereby knocking off dust or particulates that accumulated on the filter surface. The dislodged dust and particulates would typically fall downward into a collection tray at the base of the system housing, leaving the filter in a cleaner state.

One drawback of current designs is that, when conducting a cleaning operation, the highly compressed air causes some dust and particulates to escape out of the top of the collector, and back into the ambient environment. This can cause harmful particulates to return to the work space, thereby defeating a main function of the system. Currently the only way to have the unit clean is to have it cleaning while it is operating. This greatly reduces the effectiveness of cleaning, because as soon as the dust and particulates are pulsed off, it is sucked right back onto the filters. For maximum effectiveness, the unit must be turned off.

To address the challenges of conventional designs, disclosed example fume extraction and self-cleaning systems are equipped to control movable barriers to automatically close the inlets (and/or outlets) of the housing during a self-cleaning operation to prevent particles escaping into the work environment.

Advantageously, the disclosed fume extraction and self-cleaning systems provide longer useful life of the filters and the system, with greater efficiency and fume/debris collection percentages.

Although some described examples are directed to fume extraction and self-cleaning systems and operations, the examples and designs can open and/or close the movable barriers at any degree (between fully closed and fully open) for any number of reasons not required by the fume extraction or self-cleaning operations. Further, some disclosed example fume extraction and/or self-cleaning systems can be incorporated with welding systems (e.g., manual and/or automated welders).

In disclosed examples, a fume extraction system includes one or more filters arranged in a housing of the fume extraction system; one or more inlets to introduce air from an ambient environment into the housing of the fume extraction system; a self-cleaning system to expel surface particulates from the one or more filters; and one or more movable barriers arranged at the one or more inlets and outlets and configured to move from an open configuration to a closed configuration.

In some examples, the system further includes an actuator configured to activate in response to activation of the self-cleaning system.

In some examples, the actuator comprises one or more of a mechanical actuator, a hydraulic actuator, a pneumatic actuator, an electric actuator, or a gravitational actuator.

In examples, the actuator is physically connected to the one or more moveable barriers via one or more linkages, such that activation of the actuator causes movement of the one or more linkages, forcing the one or more moveable barriers to move into the closed position.

In examples, the actuator is configured to deactivate in the absence of airflow from the motor, causing movement of the one or more linkages to return to a null position, releasing the one or more movable barriers to move into a closed position.

In examples, the actuator is one of a valve or a solenoid.

In some examples, the system further includes one or more springs to bias the one or more movable barriers toward the open position.

In some examples, the self-cleaning system comprises an air compressor to force pressurized air out from a cavity of the one or more filters.

In some examples, a fume extraction system includes a motor to control suction airflow through one or more filters of the fume extraction system; a self-cleaning system to force air out from a cavity of the one or more filters; one or more inlets to introduce air from an ambient environment into the fume extraction system; and one or more moveable barriers arranged at the one or more inlets or outlets and configured to move into an open configuration during a suction operation, and move into a closed configuration.

In some examples, system further includes a mechanical actuator configured to activate in response to the airflow from the motor.

In some examples, the mechanical actuator is physically connected to the one or more moveable barriers via one or more linkages, such that activation of the mechanical actuator causes movement of the one or more linkages, forcing the one or more moveable barriers to move into the open position.

In examples, the mechanical actuator is configured to deactivate in the absence of airflow from the motor, causing movement of the one or more linkages to return to a null position, releasing the one or more moveable barriers to move into a closed position.

In some examples, the system further includes one or more springs to bias the one or more moveable barriers toward the closed position.

In some examples, the fume extraction system is an ambient fume extraction system.

In some disclosed examples, a fume extraction system includes a motor to control suction airflow through one or more filters of the fume extraction system; a pressurized air source to force air out from the cavity of the one or more filters; one or more inlets to introduce air from an ambient environment into the fume extraction system; one or more sensors to monitor the suction airflow or flow of the forced air; one or more moveable barriers arranged at the one or more inlets and configured to move between an open configuration and a closed configuration; and one or more actuators configured to move the one or more moveable barriers into the open configuration in response to the suction airflow during a suction operation, and move into a closed configuration in response to the forced air.

In some examples, the system further includes control circuitry to: receive signals from the one or more sensors corresponding to the suction airflow or flow of the forced air; compare the suction airflow or flow of the forced air to a list of suction airflow or the forced air parameters; determine whether the system is conducting the suction operation or a forced air operation; and control the one or more actuators to move the one or more moveable barriers to move into the corresponding open or closed configuration.

In some examples, the one or more sensors is one or more of an optical camera, a laser scanner, a pressure sensor, a temperature sensor, a flow sensor, a magnetic sensor, a heat sensor, a contact sensor, a current sensor, or a voltage sensor.

When introducing elements of various embodiments described below, the articles "a," "an," and "the" are intended to mean that there are one or more of the elements. The terms "comprising," "including," and "having" are intended to be inclusive and mean that there may be additional elements other than the listed elements. Moreover, while the term "exemplary" may be used herein in connection to certain examples of aspects or embodiments of the presently disclosed subject matter, it will be appreciated that these examples are illustrative in nature and that the term "exemplary" is not used herein to denote any preference or requirement with respect to a disclosed aspect or embodiment. Additionally, it should be understood that references to "one embodiment," "an embodiment," "some embodiments," and the like are not intended to be interpreted as excluding the existence of additional embodiments that also incorporate the disclosed features.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein, the terms "first" and "second" may be used to enumerate different components or elements of the same type, and do not necessarily imply any particular order.

As used herein the terms "circuits" and "circuitry" refer to any analog and/or digital components, power and/or control elements, such as a microprocessor, digital signal processor (DSP), software, and the like, discrete and/or integrated components, or portions and/or combinations thereof, including physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

The terms "control circuit," "control circuitry," and/or "controller," as used herein, may include digital and/or analog circuitry, discrete and/or integrated circuitry, microprocessors, digital signal processors (DSPs), and/or other logic circuitry, and/or associated software, hardware, and/or firmware. Control circuits or control circuitry may be located on one or more circuit boards that form part or all of a controller.

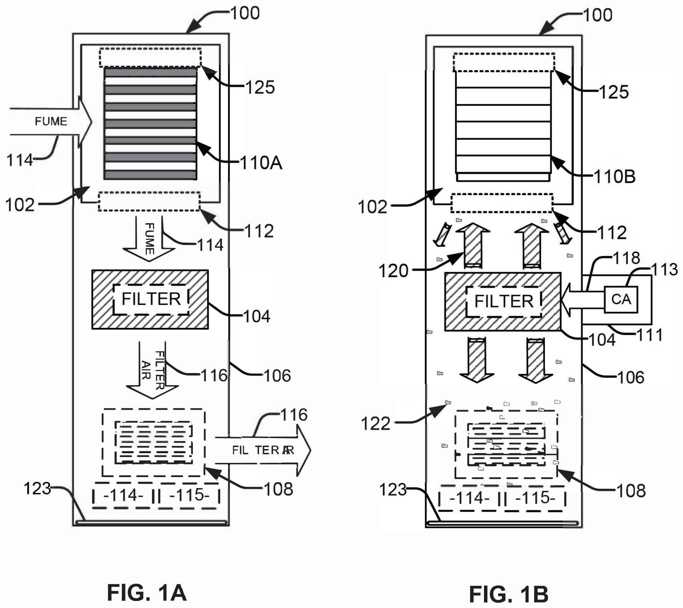

Turning now to the drawings, FIG. 1 illustrates a fume extraction system 100 for extracting airborne components, such as smoke, fumes, particulate matter, and more generally, workspace air as indicated by reference numeral 114 from a work area. In some examples, the fume extraction system 100 is employed with, synced to, and/or otherwise operating with a welding system. In the illustrated embodiment, the fume extraction system 100 includes one or more of an inlet 102 with one or more barriers or baffles 110A, 110B, an outlet 108, and one or more filters 104 arranged within a housing 106 of the fume extraction system 100. As shown, the one or more inlets introduce air 114 from an ambient environment into the housing 106 and through the filters 104 of the fume extraction system 100.

As provided in the figures, the one or more movable barriers 110A are arranged at the one or more inlets and configured to move from an open configuration during a fume extraction operation (as shown in FIG. 1A), to a closed configuration during a filter cleaning operation (as shown in FIG. 1B). For example, when barriers 110A are in an open configuration, air 114 can pass through the inlet 102 and through the filter 104, such that filtered air 116 is expelled from the outlet 108.

In some examples, a self-cleaning system 111 is employed to introduce compressed air 118 (e.g., via an air compressor 113) through the filter, such as through filter media, by directing the compressed air through a cavity of the filter to expel air 120 and particulates 122 from a surface of the filter 104. In order to ensure particulates and debris 122 are not forced back through the inlet 102, the barriers can move into a closed configuration, represented by reference numeral 110B. For example, an actuator 112 can be activated to move the barriers between open and closed configurations (e.g., in response to one or more triggers, which can include commands from control circuitry 114).

For instance, the actuator 112 can be a solenoid, a motor, and/or a valve, and can operate via impulses from electrical equipment, hydraulic pumps, pneumatic valves, and/or gravitational devices. The actuator 112 can be attached to the barriers via one or more linkages, such that movement in the actuator 112 causes movement of the barriers (e.g., from open to closed, or closed to open). In some examples, the linkages are one or more of belts, pulleys, bars, and/or chains, as a list of non-limiting examples.

The actuator may be controlled by one or more triggers. For example, the actuator may activate and/or deactivate in response to application of or changes in the pressurized air from the air compressor. The actuator may be in electrical communication with the fume extraction motor 115, such that the actuator activates and/or deactivates in response to changes (e.g., absence) of airflow from the fume extraction motor. As a result, the one or more linkages may return to a rest/null position, releasing the one or more moveable barriers to move into a closed position.

Once the barriers 110B have closed, the self-cleaning system can be activated. This action forces compressed air from a non-exposed surface of the filter to an exposed surface (e.g., from an internal cavity of the filter outward). As the compressed air is applied (e.g., in pulses), the particulates 122 are pushed into the housing 106. Since the barriers 110B are closed, the particulates 122 are not expelled into the environment through inlets 102. Thus, the particulates 122 fall to the bottom of the housing 106, and can be removed by vacuum and/or a collection tray 123.

In some examples, a biasing element or spring 125 is arranged to force the barriers in a desired position, and the actuator is used to overcome the force from the biasing element. For instance, the springs may be employed to bias the one or more movable barriers toward the open position.

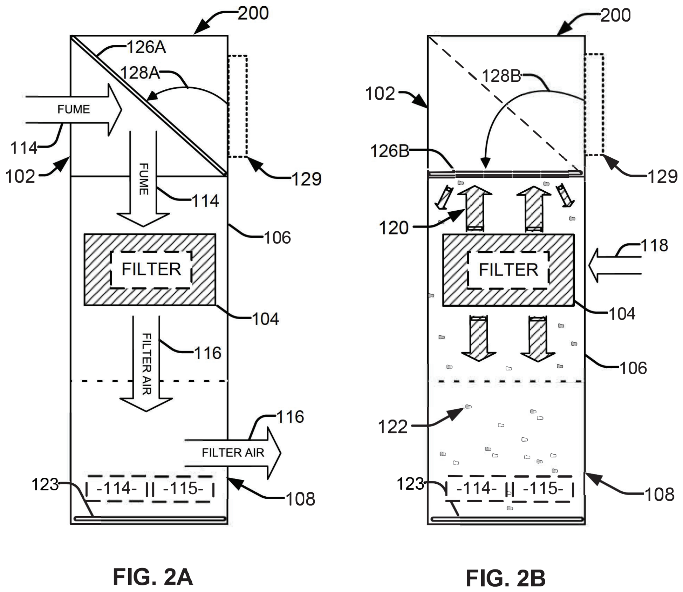

FIGS. 2A and 2B illustrate another example fume extraction system 100A, similar to the system 200. Thus, the components to determine operating mode and to actuate the linkage/barrier are similar to the system 100 described with respect to FIGS. 1A and 1B, and common reference numerals are provided where appropriate. However, the example system 200 employs an alternative movable barrier 126A, 126B and linkage 128A, 128B, illustrated in an open and a closed configuration, respectively.

As shown, the movable barrier 126A is supported by linkage 128A, shown in FIG. 2A in an open configuration. This allows fumes 114 from the work environment to enter into the housing 106 of the system 200 during a fume extraction operation.

When the system 200 transitions to a self-cleaning operation, as shown in FIG. 2B, the linkage 128B is activated by actuator 129 to force the movable barrier 126B into a closed position. In the closed position, the movable barrier 126B prevents air 120 and particulates 122 from a surface of the filter 104 returning to the work environment.

It should be noted that the fume extraction systems 100, 200 can take any suitable configuration, including a stand-alone fume extraction unit, a cart-type extraction unit, fixed or semi-fixed installations, such as those used in industrial, commercial, and hobby settings, as a list of non-limiting examples. One or more components of the fume extraction systems may serve multiple workspaces, work cells, weld cells, work locations and areas, and may work with multiple units to clean a given environment.

Moreover, it is presently contemplated that the same principles of fluid dynamics and airborne component removal may be applied to "fluids" other than air or gases (including liquids), and to that extent the teachings of the present disclosure are intended to extend to those applications.

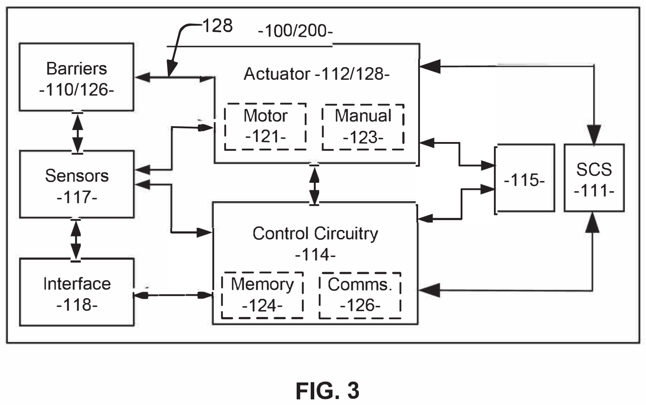

FIG. 3 illustrates an example fume extraction system 100/200 that comprises components including one or more movable barriers 110/126, one or more sensors 117, one or more actuators 112/128, control circuitry 114, a self-cleaning system 111, and/or a user interface 118 (e.g., touchscreen, control panel, etc.). The components may be fully incorporated within the systems, or one or more components may be fixed to the outside of the system (e.g., external to the housing). Some components, such as the self-cleaning system 111, may employ one or more devices external to the system 100/200 (e.g., an air compressor).

The actuator may include an automatic and/or mechanized power delivery system, such as a motor, solenoid, hydraulic or pneumatic valve 121. The actuator may be linked to the motor 115, the self-cleaning system 111, the sensors 117, and/or the control circuitry 114. Upon receipt of a command to open or close the barriers (as disclosed herein), the actuator moves the linkage (e.g., linkage 128) to force movement of the barriers.

The sensors 117 can be used to inform control circuitry 114 and/or the actuator that movement of the barriers is needed. For instance, sensors can be arranged at the inlet, outlet, with the filters, the motor 121, the self-cleaning system 111, and/or arranged within the work environment (e.g., mounted to the system 100.200, a wall, nearby equipment, etc.). The sensors 117 monitor characteristics of the airflow and/or the system(s), which can include pressure, particulate matter size, concentration, or density, and/or airflow volume (e.g., at the inlet and/or output), as a list of non-limiting examples.

The sensors can be one or more of a variety of sensors (e.g., an optical camera, a laser scanner, a pressure sensor, a temperature sensor, a flow sensor, a magnetic sensor, a heat sensor, a contact sensor, a current sensor, a magnetic sensor, a voltage sensor, an accelerometer, an inertial measuring unit, etc.), which can provide information corresponding to the operational mode (e.g., fume extraction or self-cleaning mode). The control circuitry 114 compares the information to a list of inputs corresponding to the modes. The list can be stored in the control circuitry 114 (e.g., in a memory storage device), and/or can be stored in a remote device (e.g., remote database, computer, etc.), which can be accessed via interface 118. Based on the comparison, the control circuitry 114 determines a desired operation, and commands movement of the actuators/barriers accordingly.

In some examples, original equipment or even retrofits for the disclosed fume extraction systems may be made to equipment such as shop vacuum systems, existing evacuation installations, and so forth. It is also contemplated that structures and teachings based on those set forth herein may be employed in specific settings to provide enhanced fume and airborne component collection.

As utilized herein, "and/or" means any one or more of the items in the list joined by "and/or." As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y and z." As utilized herein, the term "exemplary" means serving as a non-limiting example, instance, or illustration. As utilized herein, the terms "e.g.," and "for example" set off lists of one or more non-limiting examples, instances, or illustrations.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, systems, blocks, and/or other components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.
Certain embodiments of the invention are described in the following clauses:
Clause 1. A fume extraction system comprising:
   one or more filters arranged in a housing of the fume extraction system;
   one or more inlets to introduce air from an ambient environment into the housing of the fume extraction system;
   a self-cleaning system to expel surface particulates from the one or more filters; and one or more movable barriers arranged at the one or more inlets and outlets and configured to move from an open configuration to a closed configuration.
Clause 2. The system of clause 1, further comprising an actuator configured to activate in response to activation of the self-cleaning system.
Clause 3. The system of clause 2, wherein the actuator comprises one or more of a mechanical actuator, a hydraulic actuator, a pneumatic actuator, an electric actuator, or a gravitational actuator.
Clause 4. The system of clause 2, wherein the actuator is physically connected to the one or more moveable barriers via one or more linkages, such that activation of the actuator causes movement of the one or more linkages, forcing the one or more moveable barriers to move into the closed position.
Clause 5. The system of clause 2, wherein the actuator is configured to deactivate in the absence of airflow from the motor, causing movement of the one or more linkages to return to a null position, releasing the one or more moveable barriers to move into a closed position.
Clause 6. The system of clause 3, wherein the actuator is one of a valve or a solenoid.
Clause 7. The system of clause 1, further comprising one or more springs to bias the one or more movable barriers toward the open position.
Clause 8. The system of clause 1, wherein the self-cleaning system comprises an air compressor to force pressurized air out from a cavity of the one or more filters.
Clause 9. A fume extraction system comprising:
   a motor to control suction airflow through one or more filters of the fume extraction system;
   a self-cleaning system to force air out from a cavity of the one or more filters;
   one or more inlets to introduce air from an ambient environment into the fume extraction system; and
   one or more moveable barriers arranged at the one or more inlets or outlets and configured to move into an open configuration during a suction operation, and move into a closed configuration.
Clause 10. The system of clause 9, further comprising a mechanical actuator configured to activate in response to the airflow from the motor.
Clause 11. The system of clause 10, wherein the mechanical actuator is physically connected to the one or more moveable barriers via one or more linkages, such that activation of the mechanical actuator causes movement of the one or more linkages, forcing the one or more moveable barriers to move into the open position.
Clause 12. The system of clause 10, wherein the mechanical actuator is configured to deactivate in the absence of airflow from the motor, causing movement of the one or more linkages to return to a null position, releasing the one or more moveable barriers to move into a closed position.
Clause 13. The system of clause 10, further comprising one or more springs to bias the one or more moveable barriers toward the closed position.
Clause 14. The system of clause 10, wherein the fume extraction system is an ambient fume extraction system.
Clause 15. A fume extraction system comprising:
   a motor to control suction airflow through one or more filters of the fume extraction system;
   a pressurized air source to force air out from the cavity of the one or more filters;
   one or more inlets to introduce air from an ambient environment into the fume extraction system;
   one or more sensors to monitor the suction airflow or flow of the forced air;
   one or more moveable barriers arranged at the one or more inlets and configured to move between an open configuration and a closed configuration; and
   one or more actuators configured to move the one or more moveable barriers into the open configuration in response to the suction airflow during a suction operation, and move into a closed configuration in response to the forced air.
Clause 16. The system of clause 15, further comprising control circuitry to:
   receive signals from the one or more sensors corresponding to the suction airflow or flow of the forced air;
   compare the suction airflow or flow of the forced air to a list of suction airflow or the forced air parameters;
   determine whether the system is conducting the suction operation or a forced air operation; and
   control the one or more actuators to move the one or more moveable barriers to move into the corresponding open or closed configuration.
Clause 17. The system of clause 15, wherein the one or more sensors is one or more of an optical camera, a laser scanner, a pressure sensor, a temperature sensor, a flow sensor, a magnetic sensor, a heat sensor, a contact sensor, a current sensor, or a voltage sensor.

## Claims

1. A fume extraction system comprising:
one or more filters arranged in a housing of the fume extraction system;
one or more inlets to introduce air from an ambient environment into the housing of the fume extraction system;
a self-cleaning system to expel surface particulates from the one or more filters; and
one or more movable barriers arranged at the one or more inlets and outlets and configured to move from an open configuration to a closed configuration.

2. The system of claim 1, further comprising an actuator configured to activate in response to activation of the self-cleaning system.

3. The system of claim 2, wherein the actuator comprises one or more of a mechanical actuator, a hydraulic actuator, a pneumatic actuator, an electric actuator, or a gravitational actuator or wherein the actuator is physically connected to the one or more moveable barriers via one or more linkages, such that activation of the actuator causes movement of the one or more linkages, forcing the one or more moveable barriers to move into the closed position.

4. The system of claim 2, wherein the actuator is configured to deactivate in the absence of airflow from the motor, causing movement of the one or more linkages to return to a null position, releasing the one or more moveable barriers to move into a closed position.

5. The system of claim 3, wherein the actuator is one of a valve or a solenoid.

6. The system of claim 1, further comprising one or more springs to bias the one or more movable barriers toward the open position.

7. The system of claim 1, wherein the self-cleaning system comprises an air compressor to force pressurized air out from a cavity of the one or more filters.

8. A fume extraction system comprising:
a motor to control suction airflow through one or more filters of the fume extraction system;
a self-cleaning system to force air out from a cavity of the one or more filters;
one or more inlets to introduce air from an ambient environment into the fume extraction system; and
one or more moveable barriers arranged at the one or more inlets or outlets and configured to move into an open configuration during a suction operation, and move into a closed configuration.

9. The system of claim 8, further comprising a mechanical actuator configured to activate in response to the airflow from the motor.

10. The system of claim 9, wherein the mechanical actuator is physically connected to the one or more moveable barriers via one or more linkages, such that activation of the mechanical actuator causes movement of the one or more linkages, forcing the one or more moveable barriers to move into the open position.

11. The system of claim 9, wherein the mechanical actuator is configured to deactivate in the absence of airflow from the motor, causing movement of the one or more linkages to return to a null position, releasing the one or more moveable barriers to move into a closed position.

12. The system of claim 9, further comprising one or more springs to bias the one or more moveable barriers toward the closed position.

13. The system of claim 9, wherein the fume extraction system is an ambient fume extraction system.

14. A fume extraction system comprising:
a motor to control suction airflow through one or more filters of the fume extraction system;
a pressurized air source to force air out from the cavity of the one or more filters;
one or more inlets to introduce air from an ambient environment into the fume extraction system;
one or more sensors to monitor the suction airflow or flow of the forced air;
one or more moveable barriers arranged at the one or more inlets and configured to move between an open configuration and a closed configuration; and
one or more actuators configured to move the one or more moveable barriers into the open configuration in response to the suction airflow during a suction operation, and move into a closed configuration in response to the forced air.

15. The system of claim 14, further comprising control circuitry to:
receive signals from the one or more sensors corresponding to the suction airflow or flow of the forced air;
compare the suction airflow or flow of the forced air to a list of suction airflow or the forced air parameters;
determine whether the system is conducting the suction operation or a forced air operation; and
control the one or more actuators to move the one or more moveable barriers to move into the corresponding open or closed configuration or wherein the one or more sensors is one or more of an optical camera, a laser scanner, a pressure sensor, a temperature sensor, a flow sensor, a magnetic sensor, a heat sensor, a contact sensor, a current sensor, or a voltage sensor.
